(19) Europäisches Patentamt
European Patent Office
Office européen des brevets

(11) **EP 3 761 321 A2**

(12) **EUROPÄISCHE PATENTANMELDUNG**

(43) Veröffentlichungstag:
**06.01.2021** **Patentblatt 2021/01**

(51) Int Cl.:
***G21G 1/04*** *(2006.01)*       ***G21K 5/08*** *(2006.01)*
***H05H 6/00*** *(2006.01)*

(21) Anmeldenummer: **20000190.7**

(22) Anmeldetag: **18.05.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **05.07.2019 DE 102019004631**

(71) Anmelder: **Forschungszentrum Jülich GmbH 52425 Jülich (DE)**

(72) Erfinder:
• **Doege, Paul- Emmanuel**
  **52428 Jülich (DE)**
• **Mauerhofer, Eric**
  **52428 Jülich (DE)**
• **Zakalek, Paul**
  **52070 Aachen (DE)**
• **Baggemann, Johannes**
  **41812 Erkelenz (DE)**

(54) **VERFAHREN ZUR KÜHLUNG VON TARGETS, SOWIE KÜHLVORRICHTUNG FÜR TARGETS**

(57) Die Erfindung betrifft ein Verfahren zur Kühlung von Targets, sowie Kühlvorrichtung für Targets.

Erfindungsgemäß wird ein Verfahren zur Kühlung von Targets, bei dem ein Target auf der der Ioneneintrittsseite, gegenüber liegenden Seite zur Kühlung mit einem Kühlmittel in Kontakt gebracht wird zur Verfügung gestellt, bei dem als Wärmeleitmittel ein Flüssigmetall eingesetzt wird, welches bei der Betriebstemperatur des Targets flüssig ist, und das in Kontakt mit einem Kühlkörper steht.

EP 3 761 321 A2

**Beschreibung**

Die Erfindung betrifft ein Verfahren zur Kühlung von Targets, sowie eine Kühlvorrichtung für Targets.

Bis heute bestehen Targets für ionenbeschleunigerbasierte Neutronenquellen in vielen Fällen aus einem festen Targetkörper, welcher entweder direkt mittels Kühlflüssigkeiten (z.B. Wasser) gekühlt wird oder welcher durch Fügeverfahren wie zum Beispiel Löten, Schweißen oder (heiß-) isostatisches Pressen oder ähnlichen Verfahren mit einer festen metallischen Wärmesenke, dem Kühlkörper, verbunden ist.

Das theoretisch maximale aktive Volumen des Targetmaterials ergibt sich aus dem Produkt der Ionenreichweite im Targetmaterial und der vom Ionenstrahl beleuchteten Fläche auf dem Target. Nach dem Stand der Technik wird die Ausdehnung des Targetmaterials in Strahlrichtung kleiner gewählt als die Reichweite der Ionen, um deren Einlagerung im Target weitestgehend zu vermeiden. Ist das Target direkt mit in einem Kreislauf geführtem oder fließendem Wasser gekühlt, werden die Ionen in der Kühlflüssigkeit deponiert, wie es in der Veröffentlichung von T Rinckel et. al. in der Zeitschrift Physics Procedia "Target Performance at the Low Energy Neutron Source" 26 (2012) S 168-177 Elsevier B. V. beschrieben ist.

Ist das Target fest mit dem Kühlkörper verbunden, werden die Ionen im Kühlkörper deponiert, wie von Yutaka Yamagata et. al. "Development of a neutron generating target for compact neutron sources using low energy proton beams" J. Radioanal Nucl. Chem. (2015) 305: 787-794 gezeigt wurde. Die Wärme wird nach dem Stand der Technik, auf der der Ioneneintrittsseite gegenüberliegenden Seite durch geeignete Kühlmethoden abgeführt.

Bei heutigen Targets für ionenbeschleunigerbasierte kompakte Neutronenquellen sind die Grenzen des produzierbaren Neutronenflusses durch die zulässigen Ionenstrahlleistung begrenzt. Die kinetische Energie der Ionen wird im Target durch Ionisationsprozesse in Wärme umgewandelt. Die Spannungen können Werte erreichen, die zum Versagen des Targets führen, beispielsweise einer dauerhaften Verformung oder eine Funktionsstörung.

Beim Einsatz von anderen massebehafteten oder masselosen Teilchen für den Beschuss eines Targets, z.B. Elektronen bzw. Photonen wird ebenfalls Energie beim Abbremsvorgang bzw. bei Absorption im Target in Wärme umgewandelt.

Durch die einseitige Wärmeabfuhr bildet sich ein Temperaturgradient innerhalb des Targets der ursächlich für Spannungen im Target ist. Außerdem entstehen zusätzliche Spannungen durch gehinderte thermische Expansion des Targets und/oder durch den durch das Kühlmedium gegenüber dem Beschleunigervakuum ausgeübten Druck auf eine dünne Targetscheibe.

Bei einem mittels in einem Kreislauf geführten oder fließendem Wasser oder einem mittels einer anderen Kühlflüssigkeit direkt gekühlten Targetkörper ist der Targetkörper die einzige Barriere zwischen der Kühlflüssigkeit und dem Vakuum des Beschleunigers oder dem Vakuum zwischen einem Beschleunigerfenster und dem Targetkörper. Bei Versagen des Targetkörpers wird der jeweilige Vakuumraum mit großen Mengen Kühlflüssigkeit oder seinen Dämpfen gefüllt, was zu Zerstörung, Beschädigung oder Kontamination der Anlage führen kann. Als Targetkörper wird dabei Materie bezeichnet, welche unter Einwirkung von Masse behafteten oder masselosen Teilchen fähig ist Neutronen freizusetzen.

Bei einem Target, welches durch Fügeverfahren mit einem festen metallischen Kühlkörper verbunden ist, treten durch die unterschiedlichen thermischen Ausdehnungen des Targetmaterials und des Kühlkörpers sehr hohe Spannungen auf, die zur partiellen oder vollständigen Ablösung der beiden Metalle voneinander führen können. Durch die Ablösung ist die thermische Anbindung an den Kühlköper vermindert oder aufgehoben, was zu einer Überhitzung des Targets führen kann.

Das Weiteren reagiert bei Verwendung von Ionen ein signifikanter Anteil der Ionen, die auf das Target treffen nicht mit den Atomkernen des Targetmaterials. Diese Ionen haben eine Reichweite, die durch physikalische Modelle beschrieben werden kann. Dabei kommt ein Großteil der Ionen in einem sehr kleinen Weglängenintervall - gemessen von der Oberfläche des Targets auf der Eintrittsseite für Ionen - zum Stillstand. Durch Akkumulation, insbesondre von Ionen gasförmiger Elemente, wie zum Beispiel Wasserstoff, kann es in einem festen Stoff zu sogenanntem Blistering, einem Aufplatzen von Gasblasen im Target kommen. Um dies zu verhindern, wird nach heutigem Stand der Technik das Target dünner als die Reichweite der Ionen gestaltet. So wird ein Großteil der Ionen entweder im Kühlwasser gestoppt, oder in einem festen Kühlkörper, der gegenüber Wasserstoffeinlagerung unempfindlich ist.

Bei anderen massebehafteten oder masselosen Teilchen, ist insbesondere bei Elektronen und oder Photonen keine Einlagerung der Teilchen zu befürchten. Die Dicke wird auf größtmögliche Effektivität bei möglichst guter Wärmeabfuhr eingestellt.

Es ist daher die Aufgabe der Erfindung, ein Verfahren zur Kühlung von Targets bzw. Targetmaterialien und eine für die Kühlung von Targets bzw. Targetmaterialien geeignete Vorrichtung zur Verfügung zu stellen, welche mechanische Spannungen in einem Target bzw. Targetmaterial reduziert oder verhindert, und die thermisch bedingte Expansion des Targetmaterials ohne Beeinträchtigung des Targets bzw. des Targetmaterials ermöglicht, eine Beschädigung, z.B. ein Zerplatzen oder ein Blistering im Target bzw. Targetmaterial zu verhindern oder zu reduzieren. Weiterhin soll eine Überhitzung des Targets bzw. des Targetmaterials verhindert werden. Es soll ermöglicht werden eine höhere Leistung in das Target bzw. Targetmaterial einzutragen. Der Druck des Kühlmittels auf das Target bzw. Targetmaterial, welcher auf das gegenseitige Vakuum der Eintrittsseite für Ionen oder anderen massebehafteten oder masselosen Teilchen, z.B. Elektronen oder Photonen, gerichtet ist, soll verringert werden. Das Target bzw. Targetmaterial soll robuster gegenüber einem Versagen werden, beispielsweise soll eine dauerhafte Verformung vermieden werden. Eine Beschädigungs- oder Kontaminationsgefahr des Vakuumbereichs des Beschleunigers soll verringert oder ausgeschaltet werden. Eine Überhitzung des Target, bzw. des Targetmaterials soll verhindert werden. Die Wärmeabfuhr vom Target bzw. vom Targetmaterial soll auch bei Verformung des Targets verbessert werden.

Ausgehend vom Oberbegriff des Anspruchs 1 und des nebengeordneten Anspruchs wird die Aufgabe erfindungsgemäß gelöst durch die Merkmale des kennzeichneneden Teils dieser Ansprüche.

Mit dem erfindungsgemäßen Verfahren und der Vorrichtung werden die Nachteile des Standes der Technik überwunden. Insbesondere werden Spannungen in einem Target bzw. Targetmaterial reduziert oder verhindert, und die thermisch bedingte Expansion des Targets bzw. Targetmaterials ohne Beeinträchtigung des Targets bzw. des Targetmaterials ermöglicht. Eine Beschädigung, z.B. ein Zerplatzen oder ein Blistering im Target bzw.Targetmaterial wird verhindert oder reduziert. Weiterhin wird eine Überhitzung des Targets bzw. des Targetmaterials reduziert oder sogar verhindert. Weiterhin wird die im Target freigesetzte Wärme auch bei Verformungen des Targets oder des Kühlkörpers an den Kühlkörper weitergeleitet. Es wird ermöglicht eine höhere Leistung in das Target einzutragen, beispielsweise durch Bestrahlung mit Ionen oder durch Bestrahlung mit anderen massebehafteten oder masselosen Teilchen wie zum Beispiel Elektronen bzw. Photonen. Der Druck des Kühlmittels auf das Target bzw. Targetmaterial, welcher auf das Vakuum der Ioneneintrittsseite gerichtet ist, wird verringert. Der Druck des Kühlmediums gegenüber dem Vakuum des Beschleunigers bzw. eines Vakuums zwischen einem Strahlfenster und dem Target wird vollständig vom Kühlkörper aufgenommen. Der Druck der Kühlflüssigkeit übt keine Kraft auf das Target bzw. das Targetmaterial aus. Dadurch wird das Risiko für eine Beschädigung oder das Versagen des Target bzw. des Targetmaterials z.B. durch dauerhafte plastische Verformung vermindert. Eine Beschädigungs- oder Kontaminationsgefahr des Vakuumbereichs des Beschleunigers durch das Kühlmedium oder Bestandteile des Target bzw. des Targetmaterials wird verringert oder ausgeschaltet. Eine Überhitzung des Targets bzw. des Targetmaterials oder eine Funktionsbeeinträchtigung wird verhindert.

Vorteilhafte Weiterbildungen der Erfindung sind in den Unteransprüchen angegeben.

Im Folgenden wird die Erfindung in ihrer allgemeinen Form beschrieben, ohne dass dies einschränkend auszulegen ist.

Begrifflich werden hierbei im Folgenden ein Target, ein Targetmaterial und eine Targetscheibe auseinandergehalten.

Als Target wird ein Körper bezeichnet, welcher von seiner Funktion her geeignet ist Neutronen frei zu setzen, beispielsweise wenn er mit Ionen, oder mit anderen massebehafteten oder masselosen Teilchen wie zum Beispiel Elektronen bzw. Photonen bestrahlt wird.

Der Begriff Targetmaterial richtet sich auf chemische oder physikalische Eigenschaften, welche stofflich bedingt sind, beispielsweise Wärmeleitfähigkeit, Oxidationsbeständigkeit oder Fähigkeit Neutronen frei zu setzen.

Der Begriff Targetscheibe gibt Auskunft über die Geometrie des Targets als Scheibenförmiger Körper. Der Begriff Scheibe kann auch Ausführungsformen umfassen, welche von einer planaren Geometrie abweichen. Beispielsweise kann die Scheibe konkav, konvex oder konisch ausgebildet sein.

Erfindungsgemäß wird ein Target zur Wärmeableitung mit einem Flüssigmetall in Kontakt gebracht, welches in Kontakt mit einem Kühlkörper steht.

Als Target wird vorzugsweise eine Targetscheibe verwendet.

Grundsätzlich kann für das Target jedes Targetmaterial, das das unter Bestrahlung mit Ionen oder anderen massebehafteten oder masselosen Teilchen für die Freisetzung von Neutronen geeignet ist, verwendet werden, beispielsweise Beryllium, Lithium, Borcarbid, Bornitrid, Aluminium, Aluminiumnitrid, Titan, Niob, Tantal, Wolfram oder Blei.

Als Flüssigmetall kann ein Metall eingesetzt werden, welches bei Betriebstemperatur, die unter oder über der Raumtemperatur liegen kann, einen flüssigen Aggregatzustand besitzt. Die Betriebstemperatur ergibt sich dadurch, dass das Target bei dem im Betrieb auftretenden Temperaturen aufgeheizt wird. Diese Temperaturen sind dem Fachmann bekannt und ergeben sich aus der bei dem Gebrauch des Targets aus der durch den Strahl von masselosen oder massebehafteten Teilchen eingebrachten sowie durch die Kühlung abgeführten Wärme und die experimentelle Obergrenze der Temperatur, die im Target auftritt. Sie kann mehrere hundert bis tausende °C betragen, beispielsweise 200, 300, 400, 500, 600, 1000, 2000 oder 3000 °C oder auch Werte, die dazwischen liegen.

Das Flüssigmetall soll vorzugsweise insbesondere bei der Betriebstemperatur nicht chemisch mit dem Targetmaterial oder dem Kühlkörper reagieren.

Als Flüssigmetalle können beispielsweise Gallium, welches bei 30°C schmilzt, Lithium oder Quecksilber, welches schon unterhalb der Raumtemperatur flüssig ist, eingesetzt werden.

Es sind auch Flüssigmetalllegierungen aus mindestens zwei Komponenten aus der Gruppe der Elemente In, Ga, und Zn in entsprechenden Mengenverhältnissen möglich beispielsweise 65-95% Ga, 5-22% In und 0-11% Zn, möglich. Auch ist der Einsatz von Metallen möglich, bei denen der Schmelzpunkt zwar deutlich über Raumtemperatur liegt, jedoch auch unterhalb des Schmelzpunktes des Targetmaterials und des Kühlkörpermaterials, z.B. Indium, Blei, Zinn, Natrium oder Lithium.

Das Targetmaterial kann vorzugsweise eine geringere Dichte haben als das flüssige Metall. Das hat den Vorteil, dass das Target auf dem Flüssigmetall schwimmen kann, wenn das Target und das Flüssigmetall in einer horizontalen Schichtung vorliegen. Die Schwimmfähigkeit des Targetmaterials auf dem Flüssigmetall kann beispielsweise bei einer Materialkombination aus Beryllium und Gallium, Beryllium und Quecksilber, Kupfer und Quecksilber oder Bornitrid und Gallium, wobei die erste Komponente das Targetmaterial und die zweite genannte Komponente das Flüssigmetall ist.

Das Targetmaterial soll bei Betriebstemperatur vorzugsweise chemisch beständig, beispielsweise oxidationsbeständig, sein.

Weiterhin soll es einen möglichst geringen Ausdehnungskoeffizienten besitzen. Bevorzugt ist es auch, wenn das Targetmaterial, insbesondere bei der Betriebstemperatur, eine gute oder hohe Wärmeleitfähigkeit besitzt und/oder eine hohe Neutronenproduktion besitzt.

Als Kühlkörper können konventionelle Kühlkörper nach dem Stand der Technik eingesetzt werden. Die Materialien, aus denen die Kühlkörper bestehen, sollten bei den im Betrieb auftretenden Temperaturen vorzugsweise nicht chemisch mit dem Flüssigmetall reagieren. Diese können beispielsweise aus Metallen wie Tantal, Wolfram, Kupfer, Stahl oder Edelstahl, oder aus Nichtmetallen wie beispielsweise Graphit hergestellt sein, welche vorteilhaft mit einem Kühlmedium, wie Wasser, Gas oder einem flüssigen Metall, wie Quecksilber, Gallium oder Galliumlegierungen oder einer anderen Flüssigkeit, beispielsweise Öl, Alkohol, oder Wasser-Alkoholgemische gekühlt werden.

Durch die Umwandlung der kinetischen Energie der Ionen im Target bzw. beim Einsatz anderer massebehafteten oder masselosen Teilchen durch Energieumwandlung beim Abbremsvorgang oder der Absorption muss Wärme abgeführt werden. Bei den vorzugsweise verwendeten Targetscheiben geschieht dies über die dem Beschleunigervakuum abgewandte Seite durch Wärmeleitung. Die Wärmeleitung wird großflächig mittels einer Flüssigmetallschicht realisiert. Die erfindungsgemäß eingesetzten Flüssigmetalle weisen in der Regel eine hohe Wärmeleitfähigkeit auf. Spannungen werden vermieden, da das Target nicht an seiner Verformung gehindert wird. Die durch den Temperaturgradienten hervorgerufene Ausdehnung und Wölbung der Targetplatte kann vom Flüssigmetall ausgeglichen werden und das Target wird nicht an seiner Verformung gehindert.

Des Weiteren kann Im Falle von Bestrahlung mit Ionen der Anteil der Ionen die nicht im Target mit den vorhandenen Kernen reagieren, im Flüssigmetall deponiert werden, wo sie problemlos entweichen können, ohne die Struktur des Targets bzw. Targetmaterials durch Einlagerung, Akkumulation und Blistering zu beeinträchtigen.

Damit die Aufgabe vorteilhaft gelöst werden kann, kann zunächst die Dicke des Targets ermittelt werden. Sie ergibt sich aus der Reichweite von Ionen beim Durchdringen von Materie.

Die Reichweite eines Ions beim Durchdringen von Materie ergibt sich durch seine Abbremsung in Materie bis zum Stillstand des Ions. Sie ist abhängig vom zu durchdringenden Material - hier das Targetmaterial -, der Startenergie der Ionen und der Ionenspezies.

Die Reichweite der Ionen R(E) in einem homogenen Targetmaterial kann beispielsweise mit der frei zugänglichen Software SRIM (Stopping and Range of Ions in Matter) ermittelt werden, wobei E die Startenergie des Ions darstellt. SRIM steht unter http://www.srim.org zum Herunterladen zur Verfügung.

Für die erfindungsgemäße Auswahl der Targetdicke bzw. Targetscheibendicke $d_T$ bei gegebener Primärionenenergie $E_1$ und zu wählender Austrittsenergie $E_2$, erfolgt beispielsweise rechnerisch unter der Verwendung der Formel 1.

$$d_T = R(E_1) - R(E_2) \qquad\qquad \text{(Formel 1)}$$

$E_1$ ist hierbei die Energie des Ions beim Eintritt in das Target und
$E_2$ ist die Restenergie des Ions beim Austritt aus dem Target.
R = Reichweite der Ionen im Targetmaterial
$E_2$ kann frei als Anteil von $E_1$ gewählt werden; beispielsweise 10% von $E_1$ oder 20% von $E_1$. So ergibt sich zum Beispiel bei der Wahl von

$E_1 = 10$ MeV und

$$E_2 = 10\% * E_1 = 1 \text{ MeV}.$$

bzw.

$$E_2 = 20\% * E_1 = 2 \text{ MeV}$$

$E_2$ kann auch als fester Wert gewählt werden, der kleiner ist, als $E_1$.

Unter der Targetdicke oder der Targetscheibendicke wird die Ausdehnung des Targets oder der Targetscheibe in Einfallrichtung der Ionen oder anderer massebehafteten oder masselosen Teilchen bezeichnet.

Anschließend kann die Wärme P ermittelt werden, die im Target deponiert wird. Sie ergibt sich bei der Bestrahlung mit geladenen Teilchen, wie Elektronen oder Ionen aus Formel 2.

$$P \text{ [kW]} = (E_1 \text{ [MeV]} - E_2 \text{ [MeV]}) * I \text{ [mA]} \qquad \text{(Formel 2)}$$

wobei

E$_1$ die Energie des Ions beim Eintritt in das Target,
$E_2$ ist die Restenergie des Ions beim Austritt aus dem Target und
I = der auf dem Target ankommende Ionen- oder Elektronenstrom ist.

Die im Target deponierte Leistung bei der Verwendung von Elektronen und Photonen lässt sich am besten mittels Monte Carlo Software wie Geant4 (https://geant4.web.cern.ch/) oder EGS4 (http://www.oecd-nea.org/) ermitteln.

Auf dieser Basis kann man den maximal erwünschten Temperaturunterschied $\Delta T$ des Targets bzw. des Targetmaterials zwischen Eintrittsseite der Ionen oder anderen massebehafteten oder masselosen Teilchen des Targets bzw. Targetmaterials und der ihr gegenüber liegenden Seite rechnerisch mit Formel 3 abschätzen.

$$\Delta T = P * d_T / (2 A * \lambda) \qquad \text{(Formel 3)}$$

dabei ist

P der zuvor ermittelte Wärmeeintrag im Target
$d_T$ die Targetdicke
A die bestrahlte Targetfläche und
$\lambda$ der Wärmeleitkoeffizient des Targetmaterials

Durch den Temperaturunterschied des Targets, bzw. Targetmaterials zwischen Eintrittsseite der Ionen oder anderer masselosen oder massebehafteten Teilchen und der gegenüberliegenden Seite, entsteht eine Wölbung in Richtung der heißen Eintrittsseite für Ionen oder für andere masselose oder massebehaftete Teilchen.

Die maximale Auslenkung am Mittelpunkt des Targets kann mit $\Delta z$ nach Formel 4 beschrieben werden:

$$\Delta z = P * \alpha / (4 * \pi * \lambda_T) \qquad \text{(Formel 4)}$$

mit

$\alpha$ dem thermische Ausdehnungskoeffizient des Targetmaterials
$\lambda_T$ Wärmeleitfähigkeit des Targetmaterials
$\Delta z$ = maximale Auslenkung des Targets

* bedeutet in allen Formeln Multiplikation

Im nächsten Schritt kann ein Flüssigmetall ausgewählt werden. Es ist vorteilhaft, wenn es die folgenden Kriterien erfüllt:

(1) flüssiger Aggregatzustand bei denen im Betrieb auftretenden Temperaturen. Dadurch wird ein permanenter Kontakt des Flüssigmetalls mit dem Target und des Flüssigmetalls mit dem Kühlkörper ermöglicht, wodurch der Targetkörper über das Flüssigmetall mit dem Kühlkörper thermisch gekoppelt wird. Eine Ablösung des Targets oder des Kühlkörpers von dem zum Wärmetransport benötigten Flüssigmetall erfolgt nicht. Es kann mehr Leistung in das Target eingebracht werden. Der Wärmetransport wird auch bei Verformung des Targets oder des Kühlkörpers gewährleistet.

(2) hohe Wärmeleitfähigkeit des Flüssigmetalls

Die hohe Wärmeleitfähigkeit hat zur Folge, dass die Wärme schnell und ohne starke Erhöhung der Maximaltemperatur des Targets bzw. des Targetmaterials abgeführt werden kann.

(3) niedriger Dampfdruck des Flüssigmetalls vorzugsweise bis hin zur maximal auftretenden Temperatur im Flüssigmetall, der zu keiner Beeinträchtigung des Beschleunigervakuums führt.

Das hat den Vorteil, dass kein oder sehr wenig Dampf oder Nebel des Flüssigmetalls in den Bereich des Beschleunigers abgegeben wird, welcher unter Vakuum steht, insbesondere wenn das Target gegenüber dem Beschleunigervakuum nicht abgedichtet ist.

(4) die chemische Kompatibilität zwischen Targetmaterial und Flüssigmetall, damit eine Korrosion des Flüssigmetalls insbesondere bei Betriebstemperatur vermieden wird und damit das Targetmaterial und das Flüssigmetall sich nicht gegenseitig in ihrer Funktion beeinträchtigen. Die in Kontakt tretenden Komponenten reagieren nicht chemisch miteinander.

(5) die chemische Kompatibilität zwischen Flüssigmetall und dem Material des Kühlkörpers, damit eine Korrosion des Kühlkörpers insbesondere bei Betriebstemperatur vermieden wird, und damit der Kühlkörper und das Flüssigmetall sich nicht gegenseitig in ihrer Funktion beeinträchtigen.

Ein bevorzugtes Beispiel für ein einsetzbares Flüssigmetall ist Gallium. Es schmilzt bei 30°C, hat eine Wärmeleitfähigkeit von 29 W $m^{-1}$ $K^{-1}$ und besitzt bis hin zu hohen Temperaturen, insbesondere bei den zu erwartenden Betriebstemperaturen einen niedrigen Dampfdruck. Es ist bis hin zu hohen Temperaturen mit den üblichen Targetmetallen Beryllium und Tantal chemisch kompatibel. Weitere geeignete Flüssigmetalle sind Zinn, Natrium, Legierungen aus mindestens zwei Komponenten aus der Gruppe In, Ga, Zn, beispielsweise 65-95% Ga, 5-22% In und 0-11% Zn, in den möglichen stöchiometrischen Zusammensetzungen, Blei, Lithium oder Quecksilber. Auf diese Metalle kann aufgrund besserer Wärmeleitfähigkeit ausgewichen werden, oder falls die Gefahr von Korrosion des Targets oder des Kühlkörpers besteht.

Im darauffolgenden Schritt kann die vorteilhafte Schichtdicke des Flüssigmetalls ermittelt werden.

Dies kann analog zur Targetdickenermittlung Targetschichtdickenermittlung beispielsweise mit der Software SRIM geschehen. Die Mindestdicke entspricht der Reichweite der Ionen im Flüssigmetall, wenn sie mit einer Energie $E_2$ aus dem Target austreten. Die tatsächlich verwendete Schichtdicke $\Delta_{FM}$ sollte der Mindestschichtdicke und einem Sicherheitsbeiwert $x_1$ für die Schichtdicke bzw. Targetdicke entsprechen, um zu verhindern, dass Ionen im Kühlkörper eingelagert werden. Der Sicherheitsbeiwert kann z.B. 0,5 mm, 1,0 mm oder 1,5 mm betragen oder 50%, 100% oder 200% der Reichweite $R(E_2)$ der Ionen im Flüssigmetall betragen. Dabei sollte $x_1$ größer als $\Delta z$ gewählt werden, um die Wölbung des Targets ausgleichen zu können.

Die tatsächlich verwendete Schichtdicke $\Delta_{FM}$ des Flüssigmetalls berechnet sich also aus Formel 5

$$\Delta_{FM} = R(E_2) + x_1 \qquad\qquad \text{(Formel 5)}$$

mit $x_1 > \Delta z$,

wobei $\Delta z$ = maximale Auslenkung des Targets

$R(E_2)$ = Reichweite der Ionen im Flüssigmetall, wenn sie mit einer Energie $E_2$ aus dem Target austreten.
$x_1$ = Sicherheitsbeiwert

Durch das Anpassen der Schichtdicke des Targets welche kleiner ist, als die reichweite der Ionen im Targetmaterial, können die Ionen mit verminderter Energie wieder aus dem Target austreten. Die Einlagerung im Target bzw. Targetmaterial wird verhindert oder reduziert.

Erfindungsgemäß wird eine Vorrichtung zur Verfügung gestellt, welche zur Durchführung des Verfahrens geeignet ist.

In einer Ausführungsform besteht die erfindungsgemäße Vorrichtung eine als Kühlkörper ausgebildete Wanne, mit einem Flüssigmetall gefüllt ist. Diese Ausführungsform kann waagerecht stehen. Vorzugsweise befinden sich im Kühlkörper Kanäle, die mit einem Kühlmittel durchströmt werden.

Der Kühlkörper kann beispielsweise aus Metallen, wie Tantal, Wolfram oder Kupfer, Titan, Stahl oder Edelstahl oder aus Nichtmetallen, wie beispielsweise Graphit bestehen.

Als Kühlmittel kann beispielsweise eine Flüssigkeit, wie Wasser, Öl, Alkohol, Wasser-Alkohol-Gemisch, oder ein Gas, beispielsweise Helium, Wasserstoff, Luft, $CO_2$ oder auch in Flüssigmetall, wie z.B. Quecksilber, Gallium oder Galliumlegierungen eingesetzt werden.

Als Flüssigmetalle für die thermische Kopplung des Targets an den Kühlkörper können beispielsweise Gallium, Quecksilber, Gallium, Natrium, Indium, Zinn, Blei oder Lithium wendet werden. Als Flüssigmetall kann auch eine Legierung aus mindesten zwei Komponenten aus der Gruppe der Elemente Ga, Zn, und In eingesetzt werden, beispielsweise mit der Zusammensetzung 65-95% Ga, 5-22% In und 0-11% Zn.

Vorzugsweise hat das Flüssigmetall eine geringere Dichte als das Material des Kühlkörpers.

Insbesondere, wenn das Flüssigmetall eine geringere Dichte als das Targetmaterial aufweist, kann das Target durch Mittel zum spannungsfreien Lagern, beispielsweise Stäbe, welche vom Kühlkörper aufragen und somit das Target auf der Oberfläche des Flüssigmetalls halten, oder ein Rahmen, welcher ein L-förmiges Profil aufweist und dessen Rand größer dimensioniert ist, als das Target, so dass das Target auf einer rahmenförmigen Fläche aufliegen kann, gehalten werden. Außerdem kann das Target auch von einer Dichtung in Position gehalten werden.

In einer vertikal stehenden Vorrichtung befindet sich das Target auf der Oberfläche des Flüssigmetalls, welches in Kontakt mit einem Kühlkörper steht, dem mit einem Kühlmittel Wärme entzogen wird, wobei das Target in einem Rahmen, oder einer verformbaren Dichtung insbesondere in einem elastisch verformbaren Rahmen oder einer elastisch verformbaren Dichtung so eingebettet ist, dass das Flüssigmetall nicht auf die ihm gegenüberliegende Seite, welche mit Vakuum beaufschlagt ist, gelangen kann. Die Dichtung kann auch aus mehreren Komponenten bestehen und kann beispielsweise als C-Ring Dichtung mit einem Federkern ausgestaltet sein, welche kommerziell erhältlich ist. Eine solche Anordnung kann jedoch auch in waagerechter Position verwendet werden.

Geeignete Materialien für einen Rahmen sind Kupfer, Titan, Tantal, Edelstahl oder Wolfram für einen elastisch verformbaren Rahmen oder eine Dichtung sind z.B. Kupfer, Nickel und Titan geeignet. Es können unter Umständen auch kommerziell erhältliche Dichtungen verwendet werden, die aus einer oder mehreren Komponenten bestehen.

Die Figuren zeigen zur Durchführung des erfindungsgemäßen Verfahrens geeignete Vorrichtungen: Es zeigt:

Fig. 1:   Eine erfindungsgemäße Vorrichtung, bei der ein Target auf einem Flüssigmetall schwimmt.

Fig. 2:   Eine erfindungsgemäße Vorrichtung, bei der das Target auf dem Flüssigmetall gehalten wird.

Fig. 3:   Eine erfindungsgemäße Vorrichtung in vertikaler Position.

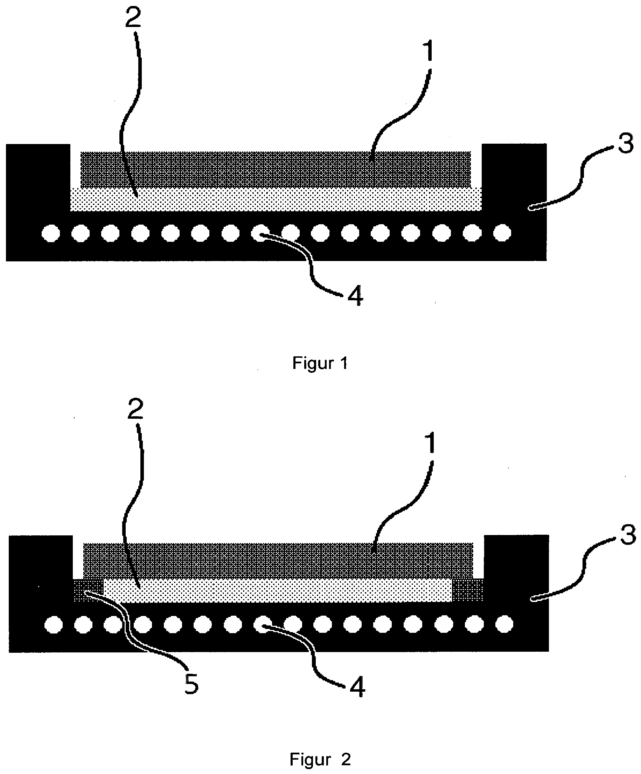

Figur 1 zeigt schematisch den Aufbau eines Targetsystems. Die Targetscheibe (1) befindet sich auf einem Flüssigmetall (2), welches sich wiederum in der wannenförmigen Vertiefung als Kühlkörper (3) befindet. Der Kühlkörper kann beispielsweise mit Kanälen (4) versehen sein, durch die eine Kühlflüssigkeit gepumpt wird.

In Figur 2 haben gleiche Vorrichtungsbestandteile dieselben Bezugszeichen. Das Bezugszeichen 5 charakterisiert den Querschnitt eines Rahmens, auf welchem die Targetscheibe (1) liegt.

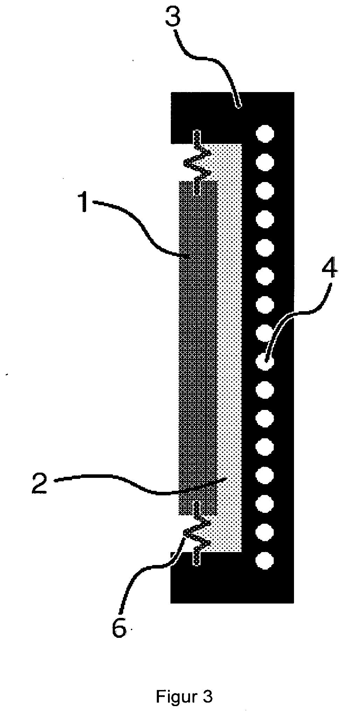

In Figur 3 haben gleiche Vorrichtungsmerkmale dieselben Bezugszeichen. Zusätzlich ist mit Bezugszeichen 6 eine verformbare Dichtung dargestellt.

Beispiel 1:

Beispielhaft, wird im Folgenden der Aufbau für ein Target für einen Protonenstrom von 10 mA und 70 MeV auf ein Tantal Target näher beschrieben.

Für die erfindungsgemäße Lösung der Aufgabe, wird die Reichweite der Projektilionen im Target ermittelt. Das Target wird dann so ausgeführt, dass seine Dicke unterhalb der Reichweite der Ionen liegt. Anschließend wird ein Flüssigmetall ausgewählt, welches mit dem Material des Kühlkörpers und des Targets kompatibel ist und nicht zu Korrosion führt. Das Flüssigmetall sollte gleichzeitig eine möglichst hohe Wärmeleitfähigkeit aufweisen. Das Target und der Kühlkörper werden durch geeignete Maßnahmen so miteinander verbunden, dass eine Lücke zwischen den beiden Bauteilen vorhanden ist, in der das Flüssigmetall Platz findet.

Zunächst wird die Dicke des Targets bestimmt. Mit Hilfe der Computersoftware SRIM wird eine Reichweite ($E_1$) von 70 MeV Protonen in Tantal (Dichte Tantal: 16,654 g cm$^{-3}$, Massenzahl Tantal: 180,95 amu, Massenzahl Proton: 1,008 amu) zu 5,07 mm bestimmt. $E_2$ soll in diesem Beispiel 10% von $E_1$, also $E_2$=7 MeV sein. Dann ist $R(E_2)$ = 0,11 mm.

Es ergibt sich die Dicke des Targets aus

$$\Delta T = R(E_1) - R(E_2) = 5{,}07 \text{ mm} - 0{,}11 \text{ mm} = 4{,}96 \text{ mm}$$

Anschließend kann die Leistung die in der Targetscheibe deponiert wird bestimmt werden.

$$P \text{ [kW]} = (E_1 \text{ [MeV]} - E_2 \text{ [MeV]}) * I \text{ [mA]}$$

$$= (70 \text{ MeV} - 7 \text{ MeV}) * 10 \text{ mA} = 63\text{kW}$$

Auf dieser Basis kann nun der Temperaturunterschied zwischen- Ober und Unterseite der Targetscheibe ermittelt werden. Unter der Voraussetzung einer üblichen bestrahlten Targetfläche von $A = 10 \text{ cm}^2$ und einem Wärmeleitkoeffizient von $\lambda = 57,5 \text{ W m}^{-1} \text{ K}^{-1}$ ergibt sich die maximal Temperaturdifferenz aus

$$\Delta T = P * d_T / (2 A * \lambda) = 63000 \text{ W} * 0,00496 \text{ m} / (2 * 0,01 \text{ m}^2 * 57,5 \text{ W/(m*K)}) = 272 \text{ K}.$$

Die maximale Auslenkung der Wölbung in der Targetmitte mit dem thermischen Ausdehnungskoeffizienten $\alpha = 6,6E-6 \text{ K}^{-1}$ ergibt sich aus

$$\Delta z = P*alpha/(4*\pi*\lambda) = 63000 \text{ W} * 6,6E-6 \text{ K}^{-1} / (4 * \pi * 57,5 \text{ W/(m*K)}) = 0,00058 \text{ m} = 0,58 \text{ mm}.$$

Als Flüssigmetall wird Gallium gewählt. Sein Schmelzpunkt liegt bei 30°C. Bei dieser Temperatur weist es eine Wärmeleitfähigkeit von $28 \text{ W m}^{-1} \text{ K}^{-1}$, welche zu höheren Temperaturen hinzunimmt. Es besitzt einen niedrigen Dampfdruck auch bei höheren Temperaturen, so das keine Abdichtung zum Beschleunigervakuum hin nötig ist. Durch waagerechten Einbau des Targets, und Ausführung des Kühlkörpers in Wannenform, kann das Metall nicht entweichen.
Die Schichtdicke des Galliums wird analog zu der Schichtdicke des Targets mit der Hilfe von SRIM ermittelt. Für $R(E_2)$ ergibt sich hierfür 0,21 mm. Der Sicherheitsbeiwert $x_1$ wird mit 1 mm gewählt.

$$\Delta_{FM} = R(E_2) + x_1 = 0,21 \text{ mm} + 1 \text{ mm} = 1,21 \text{ mm}.$$

Der Kühlkörper wird ebenfalls aus Tantal gefertigt, da dieser gegen Flüssigmetallkorrosion mit Gallium resistent ist. Da Tantal eine höhere Dichte als Gallium besitz werden am Rand Stützen in die Wanne eingebracht, die das Tantal daran hindern auf den Boden der Wanne zu sinken und somit den Abstand zum Kühlkörper zu verringern. Diese können beispielsweise eine breite von 1 mm haben. Die Höhe sollte $\Delta_{FM}$ entsprechen, also 1,21 mm.
Für den horizontalen Einbau des Targetsystems wird der Kühlkörper wannenförmig ausgebildet, um dem Flüssigmetall und der Targetscheibe Platz zu bieten. Der Kühlkörper sollte ebenso aus einem Material bestehen, welches - ebenso wie das Target - chemisch kompatibel mit dem Flüssigmetall ist. Wenn das Flüssigmetall einen niedrigen Dampfdruck hat, wie beispielsweise Gallium, ist eine Dichtung gegenüber dem Beschleunigervakuum nicht notwendig.
Im Fall, dass das Target eine geringere Dichte als das Flüssigmetall aufweist, kann das Target auf der Flüssigmetallschicht schwimmen (z.B. Beryllium auf Gallium).
Im Fall, dass das Target eine höhere Dichte als das Flüssigmetall aufweist, kann das Target an den Rändern gestützt werden. Die Stützen sollten sich außerhalb der vom Ionenstrahl beleuchteten Fläche des Targets befinden, um eine Einlagerung von Ionen in den Stützen zu vermeiden.
Das Targetsystem kann auch senkrecht eingebaut werden. Dafür muss die Targetscheibe größer ausgeführt werden, als der Strahlfleck des Ionenstrahls, um eine Einspannung in eine verformbare Dichtung, die vorzugsweise elastisch verformbar ist, zu ermöglichen, die das Auslaufen des Flüssigmetalls verhindert. Hierdurch wird das Target mechanisch an die Einspannung gekoppelt und daher teilweise in seiner Verformung gehindert, was zu erhöhten Spannungen führen kann. Ebenso muss gewährleistet sein, dass die verwendeten Dichtungen gegen die auftretende Strahlung resistent sind.

Beispiel 2:

Im Fall, dass das Target eine geringere Dichte als das Flüssigmetall aufweist, kann das Target auf der Flüssigmetallschicht schwimmen (z.B. Beryllium auf Gallium).
Beispielhaft, wird im Folgenden der Aufbau für ein Target für einen Protonenstrom von 50 mA und 20 MeV auf ein Beryllium Target näher beschrieben.
Für die erfindungsgemäße Lösung der Aufgabe, wird die Reichweite der Projektilionen im Target ermittelt. Das Target wird dann so ausgeführt, dass seine Dicke unterhalb der Reichweite der Ionen liegt. Anschließend wird ein Flüssigmetall ausgewählt, welches mit dem Material des Kühlkörpers und des Targets kompatibel ist und nicht zu Korrosion führt. Das Flüssigmetall sollte gleichzeitig eine möglichst hohe Wärmeleitfähigkeit aufweisen. Das Target und der Kühlkörper werden durch geeignete Maßnahmen so miteinander verbunden, dass eine Lücke zwischen den beiden Bauteilen vorhanden ist, in der das Flüssigmetall Platz findet.

Zunächst wird die Dicke des Targets bestimmt. Mit Hilfe der Computersoftware SRIM wird eine Reichweite ($E_1$) von 20 MeV Protönen in Beryllium (Dichte Beryllium: 1,848 g cm$^{-3}$, Massenzahl Beryllium: 9,012 amu, Massenzahl Proton: 1,008 amu) zu 2,78 mm bestimmt. Die Austrittsenergie soll in diesem Beispiel $E_2$ = 3 MeV sein. Dann ist $R(E_2)$ = 0,10 mm.

Es ergibt sich die Dicke des Targets aus

$$d_T = R(E_1) - R(E_2) = 2{,}78\ mm - 0{,}10\ mm = 2{,}68\ mm.$$

Anschließend kann die Leistung die in der Targetscheibe deponiert wird bestimmt werden.

$$P\ [kW] = (E_1\ [MeV] - E_2\ [MeV]) * I\ [mA]$$

$$= (20\ MeV - 3\ MeV) * 50\ mA = 0{,}85\ kW$$

Auf dieser Basis kann nun der Temperaturunterschied zwischen Eintrittsseite für Ionen und der gegenüberliegenden Seite der Targetscheibe ermittelt werden. Unter der Voraussetzung einer üblichen bestrahlten Targetfläche von A = 5 cm$^2$ ergibt sich bei einem Wärmeleitkoeffizient von A = 190 W m$^{-1}$ K$^{-1}$

$$\Delta T = P * \Delta T / (2\ A * \lambda) = 850\ W * 0{,}00268\ m / (2 * 0{,}005\ m^2 * 190\ W\ m^{-1}\ K^{-1}))$$

$$= 1{,}28\ K.$$

Die maximale Auslenkung der Wölbung in der Targetmitte mit dem thermischen Ausdehnungskoeffizienten $\alpha$ = 1,25E-5 K$^{-1}$ ergibt sich aus

$$\Delta z = P * \alpha / (4 * \pi * \lambda) = 850\ W * 1{,}25E\text{-}5\ K^{-1} / (4 * \pi * 190\ W\ m^{-1}\ K^{-1}) = 4{,}45\ E\text{-}6\ m = 4{,}45\ \mu m.$$

Als Flüssigmetall wird Gallium gewählt. Sein Schmelzpunkt liegt bei 30°C. Bei dieser Temperatur weist es eine Wärmeleitfähigkeit von 28 W m$^{-1}$ K$^{-1}$, welche zu höheren Temperaturen hin zunimmt. Es besitzt einen niedrigen Dampfdruck auch bei höheren Temperaturen, so dass keine Abdichtung zum Beschleunigervakuum hin nötig ist. Durch waagerechten Einbau des Targets, und Ausführung des Kühlkörpers in Wannenform, kann das Metall nicht entweichen.

Die Schichtdicke des Galliums wird analog zu der Schichtdicke des Targets mit der Hilfe von SRIM ermittelt. Für $R(E_2)$ ergibt sich hierfür 0,05 mm. Der Sicherheitsbeiwert $x_1$ wird mit 0,50 mm gewählt.

$$\Delta_{FM} = R(E_2) + x_1 = 0{,}05\ mm + 0{,}50\ mm = 0{,}55\ mm.$$

Für den horizontalen Einbau des Targetsystems wird der Kühlkörper wannenförmig ausgebildet, um dem Flüssigmetall und der Targetscheibe Platz zu bieten. Der Kühlkörper sollte ebenso aus einem Material bestehen, welches chemisch kompatibel mit dem Flüssigmetall ist. Wenn das Flüssigmetall einen niedrigen Dampfdruck hat, wie beispielsweise Gallium, ist eine Dichtung gegenüber dem Beschleunigervakuum nicht notwendig.

**Patentansprüche**

1.  Verfahren zur Kühlung von Targets, bei dem ein Target auf der der Eintrittsseite für massebehaftete oder masselose Teilchen, gegenüber liegenden Seite zur Kühlung mit einem Kühlmittel in Kontakt gebracht wird,
**dadurch gekennzeichnet,**
**dass** als Wärmeleitmittel ein Flüssigmetall eingesetzt wird, welches bei der Betriebstemperatur des Targets flüssig ist, und das in Kontakt mit einem Kühlkörper steht.

2. Verfahren nach Anspruch 1,
**dadurch gekennzeichnet,**
**dass** ein Flüssigmetall eingesetzt wird, welches eine geringere Dichte hat als das Targetmaterial des Targets.

3. Verfahren nach Anspruch 1 oder 2,
**dadurch gekennzeichnet,**
**dass** ein Target in Form einer Scheibe eingesetzt wird.

4. Verfahren nach Anspruch 2,
**dadurch gekennzeichnet,**
**dass** ein Kühlkörper verwendet wird, der in Form einer Wanne ausgebildet ist wobei das Flüssigmetall in den wannenförmigen Kühlkörper gegeben wird und das Target auf dem Flüssigmetall schwimmt.

5. Verfahren nach Anspruch 1 bis 4,
**dadurch gekennzeichnet,**
**dass** das Target spannungsfrei auf der Oberfläche des Flüssigmetalls gehalten wird.

6. Verfahren nach einem der Ansprüche 1 bis 5,
**dadurch gekennzeichnet,**
**dass** als Flüssigmetall eine Komponente aus der Gruppe Gallium, Lithium, Quecksilber, Natrium, Indium, Zinn, Blei oder eine Legierung aus mindesten zwei Komponenten aus der Gruppe der Elemente Ga, Zn, und In eingesetzt wird.

7. Verfahren nach einem der Ansprüche 5 oder 6,
**dadurch gekennzeichnet,**
**dass** die spannungsfreie Halterung des Targets durch Stützen, die ausgehend vom Kühlkörper bis zur Oberfläche des Flüssigmetalls ragen, oder durch einen Rahmen oder eine Dichtung in den das Target so eingelegt wird, dass es bei Ausdehnung nicht an eine Wand stößt ausgebildet ist, bewirkt wird.

8. Verfahren nach einem der Ansprüche 1 bis 7,
**dadurch gekennzeichnet,**
**dass** die Dicke des Targets für die Bestrahlung mit Ionen nach Formel 1 gewählt wird

$$d_T = R(E_1) - R(E_2) \qquad \text{(Formel 1)}$$

wobei

$E_1$ hierbei die Energie des Ions beim Eintritt in das Target ist und
$E_2$ die Restenergie des Ions beim Austritt aus dem Target ist.
$R$ = Reichweite der Ionen im Targetmaterial.

9. Verfahren nach einem der Ansprüche 1 bis 8,
**dadurch gekennzeichnet,**
**dass** eine Dicke des Flüssigmetalls nach Formel 5

$$\Delta_{FM} = R(E_2) + x_1 \qquad \text{(Formel 5)}$$

mit $x_1$ = Sicherheitsbeiwert, wobei
$x_1 > \Delta z$ gewählt wird und
$\Delta z$ = maximale Auslenkung des Targets und

$$\Delta z = P*\alpha/(4*\pi*\lambda_T) \qquad \text{(Formel 4)}$$

mit

$\alpha$, der thermische Ausdehnungskoeffizient des Targetmaterials,
$\lambda_T$, Wärmeleitfähigkeit des Targetmaterials und
$R(E_2)$ die Reichweite der Ionen im Targetmaterial ist.

10. Kühlvorrichtung für Targets, umfassend einen Kühlkörper,
**dadurch gekennzeichnet,**
**dass** der Kühlkörper (3) wannenförmig ausgebildet ist und mit einem Flüssigmetall gefüllt ist.

11. Kühlvorrichtung nach Anspruch 10,
**dadurch gekennzeichnet,**
**dass** der Kühlkörper (3) mit Kanälen (4) versehen ist.

12. Kühlvorrichtung nach Anspruch 10 oder 11,
**dadurch gekennzeichnet,**
**dass** der Kühlkörper (3) aus einem Material bestehend aus einer Komponente der Gruppe von Tantal, Wolfram, Kupfer, Titan Stahl, Edelstahl oder Graphit ist.

13. Kühlvorrichtung nach einem der Ansprüche 10 bis 12,
**dadurch gekennzeichnet,**
**dass** das Flüssigmetall eine Komponente aus der Gruppe Gallium, Quecksilber, Natrium, Indium, Zinn, Lithium oder Blei oder eine Legierung aus mindesten zwei Komponenten aus der Gruppe der Elemente Ga, Zn und In ist.

14. Kühlvorrichtung nach einem der Ansprüche 10 bis 13,
**dadurch gekennzeichnet,**
**dass** sie über Mittel zum Halten eines Targetkörpers verfügt.

15. Kühlvorrichtung nach Anspruch 14,
**dadurch gekennzeichnet,**
**dass** das Mittel zum Halten eines Targetkörpers eine Komponente aus der Gruppe bestehend aus von dem Kühlkörper (3) ausgehenden Stützen, ein Rahmen, dessen Rand größer als das Target dimensioniert ist, so dass das Target spannungsfrei im Rahmen ausfliehen kann und eine Dichtung.

16. Kühlvorrichtung nach Anspruch 15,
**dadurch gekennzeichnet,**
**dass** der Rahmen aus Kupfer, Tantal, Edelstahl, Titan, Nickel oder Wolfram besteht.

17. Kühlvorrichtung nach einem der Ansprüche 14 bis 16,
**dadurch gekennzeichnet,**
**dass** die Dichtung aus Kupfer, Nickel oder Titan besteht.

18. Kühlvorrichtung nach einem der Ansprüche 15 bis 17,
**dadurch gekennzeichnet,**
**dass** die Dichtung aus mehreren Komponenten besteht, beispielsweise einem C-Ring mit einem Federkern.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Target Performance at the Low Energy Neutron Source. **VON T RINCKEL.** Zeitschrift Physics Procedia. Elsevier B.V, 2012, vol. 26, 168-177

- **YUTAKA YAMAGATA.** Development of a neutron generating target for compact neutron sources using low energy proton beams. *J. Radioanal Nucl. Chem.,* 2015, vol. 305, 787-794